# FASCICULE DE BREVET EUROPEEN

(11) **EP 0 677 229 B1**
(45) Date de publication et mention de la délivrance du brevet: **19.08.1998**
(21) Numéro de dépôt: 94903918.4
(22) Date de dépôt: 28.12.1993
(51) Int. Cl.: H04N 7/167

(54) **PROCEDE DE DIFFUSION DE PROGRAMMES A ACCES CONDITIONNEL PERMETTANT UN ACCES PROGRESSIF ET PROCEDE D'ACCES PROGRESSIF A DE TELS PROGRAMMES**
VERFAHREN ZUR AUSSENDUNG VON PROGRAMMEN MIT BEDINGTEM ABER PROGRESSIVEM ZUGANG UND VERFAHREN FÜR PROGRESSIVEN ZUGANG ZU SOLCHEN PROGRAMMEN
CONDITIONAL ACCESS PROGRAMME BROADCASTING METHOD ENABLING GRADUAL ACCESS, AND GRADUAL PROGRAMME ACCESS METHOD

(30) Priorité: 29.12.1992 FR 9215841
(43) Date de publication de la demande: 18.10.1995
(73) Titulaire: FRANCE TELECOM, 75015 Paris (FR); TELEDIFFUSION DE FRANCE, 75015 Paris (FR)
(72) Inventeur: GUILLOU, Louis, F-35230 Bourgbarre (FR); GIACHETTI, Jean-Luc, F-35000 Rennes (FR); GELLY, Alain, F-75012 Paris (FR)
(74) Mandataire: Signore, Robert
(86) Numéro de dépôt international: FR9301306
(87) Numéro de publication internationale: WO9415437

(56) Documents cités:
- EP-A- 0 074 810
- US-A- 5 091 938

## Description

### Domaine technique

La présente invention a pour objet un procédé de diffusion de programmes à accès conditionnel permettant un accès progressif, ainsi qu'un procédé d'accès progressif à de tels programmes.

Elle trouve une application dans la télévision à péage, dans la diffusion de programmes radiophoniques ou de sons ou de données, dans la transmission et la distribution d'éléments de programmes, destinés à être intégrés dans des programmes de sociétés de programmes ou de cablo-distributeurs, dans le cadre d'échanges de reportages par satellite, par exemple dans les domaines de l'actualité, du sport ou du divertissement.

### Etat de la technique antérieure

Dans les systèmes classiques, tels que celui décrit dans US-A-5 091 938, l'accès aux programmes est réservé à une certaine population de récepteurs. S'il est possible de distinguer divers droits d'accès (par exemple un programme peut être simultanément accessible par abonnement et par achat impulsif), il reste qu'un récepteur est autorisé ou ne l'est pas selon qu'il dispose ou ne dispose pas d'un certain droit d'accès.

Cet état de fait ne permet pas au téléspectateur de décider, en toute connaissance de cause, de l'intérêt qu'il y aurait à accèder à tel ou tel programme. Inversement, pour le prestataire de programmes, il n'y a pas de moyens directs d'inciter le téléspectateur à acquérir de nouveaux droits d'accès, sauf à lui adresser indirectement, par voie publicitaire ou par courrier personnalisé, des informations relatives à tous les programmes disponibles.

### Exposé de l'invention

L'invention est telle que revendiquée dans la revendication 1. Sa partie caractérisante est basée sur US-A-5091938.

La présente invention a justement pour but de remédier à cet inconvénient. A cette fin, elle propose un procédé qui permet d'avoir un aperçu sur certains programmes. Cet aperçu est rendu possible par l'usage d'un droit d'accès qui n'est que partiel, au contraire du droit d'accès habituel, qui est total. Ainsi, à côté des récepteurs autorisés, qui peuvent accéder complétement à un programme et des récepteurs non autorisés, qui ne peuvent rien recevoir de ce programme, on trouvera, selon l'invention, d'autres récepteurs qui pourront avoir un aperçu du programme, c'est-à-dire qui pourront accéder à une forme discernable mais non utilisable du programme.

Ce droit d'accès partiel introduit par l'invention sera appelé également "droit d'aperçu" dans la suite de la description. Les récepteurs disposant de ce droit d'aperçu seront appelés "récepteurs restreints".

Avec l'invention, on n'a donc plus deux mais en général trois niveaux de perception :
- le cas où l'image est claire ;
- le cas où l'image est perceptible mais non utilisable ;
- le cas où l'image n'est plus perceptible.

Les utilisateurs des récepteurs restreints pourront alors choisir d'acquérir un droit d'accès pour un programme et cela en toute connaissance de cause. Un aspect incitatif est ainsi obtenu.

A titre d'exemple, le procédé de l'invention peut être avantageusement appliqué à :
- l'incitation à l'abonnement en télévision à péage,
- l'incitation à la consommation impulsive de programmes en télévision à péage,
- l'incitation à l'achat de programmes proposés par des titulaires de droits, sociétés de programmes ou producteurs, dans le cadre d'échanges de programmes ou de reportages par satellites, par exemple dans les domaines de l'actualité, du sport ou du divertissement.

De façon plus précise, la présente invention a pour objet un procédé de diffusion de programmes à accès conditionnel, dans lequel, de manière connue :
- on embrouille des informations propres à divers programmes,
- on transmet les informations ainsi embrouillées pour chaque programme,
- de manière synchronisée avec chaque programme, on transmet des messages de contrôle d'accès propres à chacun de ces programmes, ces messages étant aptes à permettre le désembrouillage et la restitution des programmes dans des récepteurs disposant des droits d'accès correspondants,
ce procédé étant caractérisé par le fait que l'on transmet en outre des messages de contrôle d'accès partiel à au moins certains de ces programmes, ces messages de contrôle d'accès partiel étant aptes à permettre le désembrouillage et la restitution partielle des programmes correspondants pour des récepteurs disposant d'un droit d'accès partiel.

De manière avantageuse, pour mettre en oeuvre ce procédé :
- on découpe le flux d'informations correspondant à chaque programme en un premier flux dit flux élémentaire, correspondant à un programme qui, une fois restitué dans un récepteur, sera discernable sans être directement utilisable, et un second flux, dit flux complémentaire, permettant de compléter le premier, pour permettre de restituer complétement le programme.

Dans cette variante, les messages de contrôle d'accès partiel s'appliqueront aux flux élémentaires.

La présente invention a également pour objet un procédé d'accès progressif à des programmes, lesquels ont été émis comme il vient d'être décrit. Dans ce procédé et de manière connue :
- on sélectionne un programme et on reçoit un message de contrôle d'accès relatif à ce programme sélectionné,
- on reçoit des informations embrouillées,
- à l'aide du message et d'un droit d'accès, on désembrouille les informations du programme sélectionné ;
le procédé de l'invention est caractérisé par le fait que :
- on reçoit en outre des messages de contrôle d'accès partiel,
- grâce à un droit d'accès partiel, on désembrouille et on restitue partiellement le programme correspondant,
- éventuellement, on acquiert un droit d'accès pour avoir accès complétement audit programme.

La définition qui vient d'être donnée de l'invention, avec émission de messages de contrôle d'accès partiel et restitution partielle d'un programme à l'aide d'un droit d'accès partiel, n'est en fait pas limitée au seul cas où l'image correspondant au droit d'accès partiel est un aperçu d'une image, c'est-à-dire une image perceptible mais non exploitable. Cette définition couvre aussi le cas où l'image obtenue est d'une qualité certes inférieure à celle d'une image qui utiliserait la totalité de l'information diffusée, mais qui serait néanmoins exploitable. Les différents récepteurs mettant en oeuvre l'invention peuvent donc avoir des niveaux de perception différents. Certains récepteurs pourront travailler avec un très haut niveau de qualité d'image et devront utiliser pour cela toute l'information transmise, (s'ils sont munis du droit d'accès correspondant) ; d'autres travailleront avec un niveau de qualité inférieure, mais néanmoins acceptable, impliquant une partie seulement des informations transmises (s'ils sont munis d'un droit d'accès partiel).

Par exemple, un programme de télévision en haute définition HDMAC peut être reçu par des récepteurs D2MAC. Dans cette situation, il serait souhaitable que les récepteurs D2MAC soient moins redevables que les récepteurs HDMAC. Un tel résultat est possible avec l'invention avec les niveaux suivants de perception :
- programme totalement embrouillé,
- perception en D2MAC,
- perception en HDMAC.

Naturellement, il est possible d'introduire, en outre, dans la hiérarchie précédente, un niveau de perception restreinte, conduisant à des images non exploitables mais perceptibles, pour inciter le téléspectateur à acquérir des droits d'accès correspondant à un niveau de perception plus élevé dans la hiérarchie.

Néanmoins, dans la description qui va suivre, et pour simplifier, on se limitera au cas où l'on a introduit un droit d'accès partiel correspondant à des images perceptibles mais non exploitables.

### Exposé détaillé de modes de réalisation

Le procédé de l'invention peut se mettre en oeuvre avantageusement en organisant une composante vidéo en au moins deux flux, lorsqu'il s'agit de transmettre des programmes de télévision. Un premier flux, appelé flux élémentaire, permet d'obtenir une image discernable sans être directement utilisable. Un second flux, appelé flux complémentaire, permet d'obtenir le complément de la composante vidéo.

Trois méthodes au moins permettent de réaliser une telle découpe de la composante vidéo. Cette découpe peut être qualitative, spatiale ou temporelle :
a) Dans une découpe qualitative, le flux élémentaire transporte l'ensemble des informations donnant une image de qualité très médiocre. Le flux complémentaire transporte des informations donnant à l'image toute sa qualité. La découpe qualitative peut encore être considérée comme une extension du codage hiérarchique, qui permet d'obtenir différents niveaux de perception avec le même signal. Aux niveaux de qualité actuellement répertoriés (qualité équivalent "VHS", qualité équivalent "SECAM", qualité équivalent "D2MAC", qualité équivalent "HD") est ajouté un niveau de qualité très médiocre fournissant une image discernable, mais non exploitable.
b) Dans une découpe spatiale, l'image est, par exemple, découpée horizontalement en quelques bandes de plusieurs lignes consécutives. Une partie des bandes, (par exemple la moitié) constitue le flux élémentaire et l'autre partie (l'autre moitié) constitue le flux complémentaire.
c) Dans une découpe temporelle, le temps est décomposé en périodes d'une certaine durée (par exemple une dizaine de secondes). Une partie de la période (2 à 3 secondes) constitue le flux élémentaire, tandis que le reste de la période constitue le flux complémentaire.

Dans ce cas, c'est le principe même de la découpe temporelle à une fréquence suffisamment élevée qui permet d'obtenir un programme discernable, mais non directement utilisable.

Quelle que soit la variante utilisée, le procédé de l'invention consiste d'abord à embrouiller séparément chacun des flux, par exemple avec des suites de mots de contrôle différents, puis à attribuer des critères d'accès à chaque suite de mots de contrôle, de sorte que les conditions suivantes soient vérifiées :
- un droit d'accès permet d'accéder aux deux suites de mots de contrôle,
- un droit partiel ou d'aperçu permet d'accéder seulement à la suite des mots de contrôle permettant de désembrouiller le flux élémentaire.

Le détenteur d'un droit d'aperçu peut donc discerner la présence d'un programme, voire même en apprécier la nature et l'intérêt. Il lui reste à acquérir, s'il le souhaite, un droit d'accès pour accéder au programme complet.

Dans la variante qui précède, les deux flux sont embrouillés par deux séries de mots différents. Dans une autre variante, on peut utiliser une même série de mots de contrôle pour embrouiller les deux flux. Sachant, en effet, que les mots de contrôle ont une durée de vie limitée (environ 10 secondes en D2MAC Eurocrypt), il est possible de définir trois populations de récepteurs : les récepteurs ne disposant pas du mot de contrôle ne voient pas du tout le programme ; les récepteurs disposant du mot de contrôle en clair durant toute sa période de validité ont accès au programme ; les récepteurs ayant accès aux mots de contrôle pendant les derniers instants de leur période de validité ont accès à l'aperçu.

Ce dernier cas est possible en ajoutant, dans la messagerie de contrôle d'accès, quelques secondes avant la fin de la vie de chaque mot de contrôle, un nouveau critère, qui est le critère d'aperçu, autorisant l'accès au mot de contrôle qui termine sa vie. Ce nouveau critère sera utilisé par les récepteurs restreints. Bien entendu, durant la fin de la vie d'un mot de contrôle, il ne faut pas diffuser le cryptogramme du mot de contrôle suivant.

Les schémas suivants illustrent cette variante dans le cas où chaque mot de contrôle a une durée de vie de 10 s. Dans ces schémas, l'abréviation AC signifie critère d'accès, AP critère d'aperçu, CWe (ou CW'e) cryptogramme d'un mot de contrôle pair, CWo (ou CW'o) cryptogramme d'un mot de contrôle impair.

Les messages émis sont alors les suivants, pendant les différentes périodes :
- première période : AC, (CWo, CWe) pendant 7 secondes,
- puis AC, AP, (CWe) pendant 3 secondes,
- deuxième période AC, (CWo, CW'e) pendant 7 secondes,
- puis AC, AP, (CWo) pendant 3 secondes,
- troisième période AC, (CW'o, CW'e) pendant 7 secondes,
- puis AC, AP, (CW'e) pendant 3 secondes.

Avec un tel schéma, toutes les dix secondes, pendant trois secondes, les récepteurs disposant d'un droit d'aperçu vont pouvoir reconstituer le programme.

Si plusieurs programmes sont véhiculés sur le même réseau, tous les programmes peuvent utiliser le même critère d'aperçu et le même mot de contrôle pour autoriser le désembrouillage du flux élémentaire. Ainsi, si l'usager dispose de ce mot de contrôle, il accédera rapidement aux flux élémentaires de tous les programmes du réseau sans avoir à acquérir ou à calculer un nouveau droit et un nouveau mot de contrôle pour chaque programme. Cette mise en oeuvre permet d'éliminer le temps de commutation dû à l'accès conditionnel quand on passe d'un programme à l'autre à l'intérieur d'un bouquet de programmes dont l'embrouillage est synchronisé au point d'émission.

On peut souligner, pour finir, que l'invention qui vient d'être décrite est particulièrement avantageuse lorsque les signaux diffusés sont de nature numérique (par opposition aux signaux analogiques). On peut observer à cet égard que les techniques d'embrouillage font apparaître deux contraintes contradictoires :
- d'une part, le confort de l'usager, qui ne doit pas être affecté par l'embrouillage ce qui requiert que les techniques d'embrouillage n'amplifient pas les erreurs ou les distorsions introduites par les aléas dus à la transmission, et ceci entre les opérations d'embrouillage centralisées au point d'émission et les opérations de désembrouillage pratiquées dans chaque décodeur ;
- d'autre part, le piratage, qui doit être rendu difficile, ce qui requiert que le signal soit bien protégé.

En pratique, l'embrouillage doit être adapté au codage de chaque composante du service : images, sons et données. Ainsi, les traitements possibles sur les éléments analogiques du signal restent très limités, car dès que les traitements se compliquent quelque peu, les dégradations dues aux opérations successives d'embrouillage et de désembrouillage deviennent vite inacceptables pour les usagers. En d'autres termes, les normes les plus utilisées à ce jour pour transmettre les sons et les images de télévision (SECAM, PAL et NTSC) sont économiquement peu compatibles avec les traitements qui rendraient le signal très difficile à pirater. La corrélation entre le signal embrouillé et le signal en clair reste très importante. Par exemple, les images dues au procédé DISCRET I utilisé aujourd'hui par la chaîne CANAL PLUS, restent très reconnaissables. Des pirates reconstituent facilement ces images. Pour limiter la fraude, il faudrait des techniques sophistiquées d'embrouillage qui seraient peu compatibles avec l'objectif d'obtenir un décodeur bon marché.

La situation se modifie radicalement pour les éléments numériques du signal. La protection peut alors devenir considérable, même avec une opération d'embrouillage sommaire consistant à combiner bit à bit, par une porte logique "OU-exclusif", des suites de bits représentant des échantillons numérisés de signal avec des suites de bits produites par un générateur pseudo-aléatoire. Par exemple, les images embrouillées reçues sur un décodeur de télévision numérique à 34 Mbits ne laissent rien paraître. La corrélation entre un signal embrouillé et un signal en clair devient très difficile. Il ne peut donc pas y avoir d'incitation. Le procédé de l'invention, en introduisant l'accès à un aperçu, permet de remédier à cet inconvénient.

## Revendications

1. Procédé de diffusion de programmes à accès conditionnel, dans lequel :
- on embrouille des informations propres à divers programmes,
- on transmet les informations ainsi embrouillées pour chaque programme,
- de manière synchronisée avec chaque programme, on transmet des messages de contrôle d'accès propres à chacun de ces programmes, ces messages étant aptes à permettre le désembrouillage et la restitution des programmes dans des récepteurs disposant des droits d'accès correspondants,
ce procédé étant caractérisé par le fait que l'on transmet en outre des messages de contrôle d'accès partiel à au moins certains de ces programmes, ces messages de contrôle d'accès partiel étant aptes à permettre le désembrouillage et la restitution partielle des programmes correspondants pour des récepteurs disposant d'un droit d'accès partiel.

2. Procédé selon la revendication 1, caractérisé par le fait que :
- on découpe le flux d'informations correspondant à chaque programme en un premier flux, dit flux élémentaire, correspondant à un programme qui, une fois restitué dans un récepteur, sera discernable sans être directement utilisable, et un second flux, dit flux complémentaire, permettant de compléter le premier, pour permettre de restituer complétement le programme,
- les messages de contrôle d'accès partiel correspondent aux flux élémentaires.

3. Procédé selon la revendication 2, dans lequel les programmes sont des programmes de télévision, caractérisé par le fait que le flux d'informations séparé en deux flux est le flux d'informations correspondant à la composante vidéo d'une image de télévision.

4. Procédé selon la revendication 3, caractérisé par le fait que le flux élémentaire transporte des informations correspondant à une image de qualité dégradée, et que le flux complémentaire transporte des informations complémentaires permettant de restituer l'image avec sa qualité normale.

5. Procédé selon la revendication 3, caractérisé par le fait que :
- on découpe chaque image horizontalement en bandes de plusieurs lignes consécutives,
- on constitue le flux élémentaire à partir d'informations relatives à une partie des bandes,
- on constitue le flux complémentaire à partir d'informations relatives à l'autre partie des bandes.

6. Procédé selon la revendication 3, caractérisé par le fait que :
- on découpe le signal vidéo en périodes de temps,
- on constitue le flux élémentaire à partir d'informations prises dans une partie de chaque période,
- on constitue le flux complémentaire à partir d'informations prises dans le restant de chaque période.

7. Procédé selon la revendication 2, caractérisé par le fait que :
- on embrouille séparément le flux élémentaire et le flux complémentaire avec deux suites de mots de contrôle différents,
- on attribue des critères d'accès à chaque suite de mots de contrôle, un droit d'accès étant aptes à permettre d'accéder aux deux suites de mots de contrôle relatifs aux flux élémentaire et complémentaire, un droit d'accès partiel étant apte à permettre d'accéder seulement à la suite de mots de contrôle relatifs au flux élémentaire.

8. Procédé selon la revendication 2, caractérisé par le fait que :
- on embrouille le flux élémentaire et le flux complémentaire avec une même suite de mots de contrôle, chaque mot de contrôle ayant une durée de vie limitée,
- on ajoute aux messages spécifiant les critères d'accès, avant la fin de la vie de chaque mot de contrôle, un critère d'accès partiel qui donnera aux récepteurs disposant d'un droit d'accès partiel, accès au mot de contrôle correspondant à la fin de la vie de ce mot.

9. Procédé selon l'une quelconque des revendications 2 à 8, caractérisé par le fait que plusieurs programmes étant séparés en flux élémentaire et en flux complémentaire, on utilise un même mot de contrôle pour embrouiller le flux élémentaire de tous ces programmes et on transmet un même critère d'accès partiel apte à permettre le désembrouillage du flux élémentaire de chaque programme pour les récepteurs disposant d'un droit d'accès partiel.

10. Procédé selon la revendication 2, dans lequel les programmes sont des programmes de télévision, caractérisé par le fait que le flux d'informations séparé en deux flux est le flux d'informations correspondant à la composante son.

11. Procédé selon la revendication 1, caractérisé par le fait que les programmes sont des programmes radiophoniques.

12. Procédé selon la revendication 1, caractérisé par le fait que les programmes sont des programmes de diffusion de données.

13. Procédé d'accès progressif à des programmes, ces programmes ayant été émis selon l'une quelconque des revendications 1 à 12, dans lequel :
- on sélectionne un programme et on reçoit un message de contrôle d'accès relatif à ce programme sélectionné,
- à l'aide de ce message et d'un droit d'accès, on désembrouille les informations du programme sélectionné,
caractérisé par le fait que :
- on reçoit en outre des messages de contrôle d'accès partiel,
- grâce à un droit d'accès partiel, on désembrouille et on restitue partiellement le programme correspondant,
- éventuellement, on acquiert un droit d'accès pour avoir accès complétement audit programme.

## Patentansprüche

1. Verfahren zur Aussendung von Programmen mit bedingtem Zugang, bei dem man:
- zu diversen Programmen gehörende Informationen bzw. Daten verschlüsselt,
- die so verschlüsselten Informationen bzw. Daten für jedes Programm überträgt,
- auf mit jedem Programm synchronisierte Weise jedem dieser Programme eigene Zugangskontrollnachrichten überträgt, wobei diese Nachrichten fähig sind, die Entschlüsselung und Wiederherstellung der Programme in Empfängern zu ermöglichen, die über entsprechende Zugangsrechte verfügen,
dabei ist dieses Verfahren **dadurch gekennzeichnet**, daß man außerdem für wenigstens einige dieser Programme partielle Zugangskontrollnachrichten überträgt, wobei diese partiellen Zugangskontrollnachrichten fähig sind, die Entschlüsselung und partielle Wiederherstellung der entsprechenden Programme Empfängern zu ermöglichen, die über ein partielles Zugangsrecht verfügen.

2. Verfahren nach Anspruch 1, dadurch gekennzeichnet, daß:
- man man den jedem Programm entsprechenden Informations- bzw. Datenfluß aufteilt in einen ersten Fluß, Elementarfluß genannt, einem Programm entsprechend, das, wenn in einem Empfänger wiederhergestellt, unterscheidbar ist ohne direkt brauchbar zu sein, und einen zweiten Fluß, Komplementärfluß genannt, der ermöglicht, den ersten zu vervollständigen, um das Programm vollständig wiederherzustellen,
- die partiellen Zugangskontrollnachrichten den Elementarflüssen entsprechen.

3. Verfahren nach Anspruch 2, bei dem die Programme Fernsehprogramme sind, dadurch gekennzeichnet, daß der in zwei Flüsse aufgeteilte Datenfluß der der Videokomponente eines Fernsehbilds entsprechende Datenfluß ist.

4. Verfahren nach Anspruch 3, dadurch gekennzeichnet, daß der Elementarfluß Daten überträgt, die einem Bild von schlechter Qualität entsprechen und daß der Komplementärfluß komplementäre Daten überträgt, die ermöglichen, das Bild mit seiner Normalqualität wiederherzustellen.

5. Verfahren nach Anspruch 3, dadurch gekennzeichnet, daß:
- man jedes Bild horizontal in Streifen mit mehreren aufeinanderfolgenden Zeilen zerlegt,
- man den Elementarfluß aus Daten bildet, die einen Teil der Streifen betreffen,
- man den Komplementärfluß aus Daten bildet, die den anderen Teil der Streifen betreffen.

6. Verfahren nach Anspruch 3, dadurch gekennzeichnet, daß:
- man das Videosignal in Zeitperioden zerlegt,
- man den Elementarfluß aus Daten bildet, die man einem Teil jeder Periode entnimmt,
- man den Komplementärfluß aus Daten bildet, die man dem Rest jeder Periode entnimmt.

7. Verfahren nach Anspruch 2, dadurch gekennzeichnet, daß:
- man den Elementarfluß und den Komplementärfluß getrennt verschlüsselt, mit zwei Folgen unterschiedlicher Kontrollwörter,
- man jeder Kontrollwörterfolge Zugangskriterien zuordnet, wobei ein Zugangsrecht fähig ist, den Zugang zu zwei den Elementar- und den Komplementärfluß betreffenden Kontrollwörterfolgen zu ermöglichen, und ein partielles Zugangsrecht nur fähig ist, den Zugang zu der den Elementarfluß betreffenden Kontrollwörterfolge zu ermöglichen.

8. Verfahren nach Anspruch 2, dadurch gekennzeichnet, daß:
- man den Elementarfluß und den Komplementärfluß mit derselben Kontrollwörterfolge verschlüsselt, wobei jedes Kontrollwort eine begrenzte Lebensdauer hat,
- man den die Kriterien spezifizierenden Nachrichten vor dem Ende der Lebensdauer jedes Kontrollworts ein partielles Zugangskriterium hinzufügt, das den über ein partielles Zugangsrecht verfügenden Empfängern Zugang zu dem entsprechenden Kontrollwort am Lebensende dieses Worts gibt.

9. Verfahren nach einem der Ansprüche 2 bis 8, dadurch gekennzeichnet, daß mehrere Programme in Elementarfluß und Komplementärfluß geteilt werden, man ein und dasselbe Kontrollwort benutzt, um den Elementarfluß aller dieser Programme zu verschlüsseln, und man ein und dasselbe partielle Zugangskriterium überträgt, das den Empfängern, die über ein partielles Zugangsrecht verfügen ermöglicht, den Elementarfluß jedes Programms zu entschlüsseln.

10. Verfahren nach Anspruch 2, bei dem die Programme Fernsehprogramme sind, dadurch gekennzeichnet, daß der in zwei Flüsse geteilte Datenfluß der der Tonkomponente entsprechende Fluß ist.

11. Verfahren nach Anspruch 1, dadurch gekennzeichnet, daß die Programme Radio- bzw. Funkprogramme sind.

12. Verfahren nach Anspruch 1, dadurch gekennzeichnet, daß die Programme Datenaussendungsprogramme sind.

13. Verfahren für progressiven Zugang zu Programmen, ausgesendet nach einem der Ansprüche 1 bis 12, bei dem:
- man ein Programm wählt und man eine dieses gewählte Programm betreffende Zugangskontrollnachricht bekommt,
- man mit Hilfe dieser Nachricht und einem Zugangsrecht die Informationen bzw. Daten des gewählten Programms entschlüsselt,
**dadurch gekennzeichnet**, daß:
- man außerdem partielle Kontrollnachrichten erhält,
- man dank eines partiellen Zugangsrechts das entsprechende Programm entschlüsselt und wiederherstellt,
- man eventuell ein Zugangsrecht erwirbt, um vollständigen Zugang zu dem genannten Programm zu haben.

## Claims

1. Process for the broadcasting of conditional access programmes, in which:
- informations specific to various programmes are scrambled,
- the thus scrambled informations are transmitted for each programme,
- synchronized with each programme transmission takes place of access checking messages specific to each of these programmes and which are able to permit the descrambling and restoration of programmes in receivers having corresponding access rights,
said process being characterized in that there is also a transmission of partial access checking messages to at least some of these programmes, said partial access checking messages being able to permit the descrambling and partial restoration of the corresponding programmes for receivers having a partial access right.

2. Process according to claim 1, characterized in that:
- the information flow corresponding to each programme is subdivided into a first or elementary flow corresponding to a programme which, once restored in a receiver, will be discernible without being directly usable, and a second or complementary flow making it possible to complete the first flow, so as to permit the complete restoration of the programme,
- the partial access checking messages correspond to the elementary flows.

3. Process according to claim 2, in which the programmes are television programmes, characterized in that the information flow subdivided into two flows is the information flow corresponding to the video component of a television picture.

4. Process according to claim 3, characterized in that the elementary flow transports informations corresponding to a deteriorated quality picture and the complementary flow transports complementary informations making it possible to restore the picture with its nbrmal quality.

5. Process according to claim 3, characterized in that:
- each picture is horizontally subdivided into bands of several consecutive lines,
- the elementary flow is formed from informations relative to one part of the bands,
- the complementary flow is formed from informations relative to the other part of the bands.

6. Process according to claim 3, characterized in that:
- the video signal is subdivided into time periods,
- the elementary flow is formed from informations taken in one part of each period,
- the complementary flow is formed from informations taken in the remainder of each period.

7. Process according to claim 2, characterized in that:
- the elementary flow and the complementary flow are separately scrambled with two different check word sequences,
- access criteria are allocated to each check word sequence, an access right being able to give access to two sequences of check words relative to the elementary and complementary flows, whilst a partial access right is able to give access only to the sequence of check words relative to the elementary flow.

8. Process according to claim 2, characterized in that:
- the elementary flow and the complementary flow are scrambled with a same check word sequence, each check word having a limited life,
- to the messages specifying the access criteria and prior to the end of the life of each check word, is added a partial access criterion, which will give receivers having a partial access right access to the check word corresponding to the end of the life of said word.

9. Process according to any one of the claims 2 to 8, characterized in that several programmes are subdivided into an elementary flow and a complementary flow, the same check word being used for scrambling the elementary flow of all these programmes and transmission takes place of the same partial access criterion able to permit the descrambling of the elementary flow of each programme for receivers having a partial access right.

10. Process according to claim 2, in which the programmes are television programmes, characterized in that the information flow subdivided into two flows is the information flow corresponding to the sound component.

11. Process according to claim 1, characterized in that the programmes are radio programmes.

12. Process according to claim 1, characterized in that the programmes are data broadcasting programmes.

13. Process for the progressive access to programmes, which have been transmitted in accordance with any one of the claims 1 to 12 and in which:
- selection takes place of a programme and an access checking message relative to said selected programme is received,
- scrambled informations are received,
- with the aid of the message and an access right, the selection programme informations are descrambled,
characterized in that:
- partial access checking messages are also received,
- by means of a partial access right, descrambling and partial restoration of the corresponding programme take place,
- optionally, there is an acquisition of an access right in order to have complete access to said programme.
